# EUROPEAN PATENT APPLICATION

(11) **EP 4 787 690 A1**
(43) Date of publication of application: **05.08.2026**
(21) Application number: 25154732.9
(22) Date of filing: 29.01.2025
(51) Int. Cl.: H02M 1/00, H02M 1/42, H02M 3/155, H02M 3/158, H02M 7/483, H02M 7/487

(54) **BIDIRECTIONAL V2G MODULE WITH GRID-CONNECTED AND OFF-GRID FUNCTIONALITY**

(71) Applicant: Guangdong Gospower Electric Technology Co., Ltd., Dongguan, Guangdong 523858 (CN)
(72) Inventor: ZHANG, Shichun, DongGuan City, 523858 (CN); RUAN, Shilin, DongGuan City, 523858 (CN); LONG, Yonglin, DongGuan City, 523858 (CN)
(74) Representative: Lapienis, Juozas

(57) **Abstract**

A bidirectional V2G module with grid-connected and off-grid functionality comprises a control circuit, a rectification inverter circuit, and a bidirectional DCDC conversion circuit. The bidirectional DCDC conversion circuit comprises a transformer bank, a primary bus side circuit, and at least one secondary energy storage circuit. The primary bus side circuit comprises a power bus positive terminal VBUS+, a power bus negative terminal VBUS-, and a plurality of primary balance branches. Each branch comprises a switching tube, an inductor, a primary energy storage capacitor, and a primary balance capacitor. The secondary energy storage circuit comprises a secondary switching tube, a secondary energy storage capacitor, and a secondary energy storage inductor. The primary balance switching tubes synchronously switching while the secondary balance switching tubes are proved with complementary switch to the corresponding primary balance switching tubes.

## Description

### TECHNICAL FIELD

The present disclosure relates to the field of bidirectional DC conversion, and more particularly to a bidirectional V2G module with grid-connected and off-grid functionality.

### BACKGROUND

Renewable energy systems, such as solar and wind energy, are being widely integrated into the power system. Since natural discontinuity of renewable energy sources will cause fluctuations in power generation, there is an urgent need for other energy sources (such as battery energy storage systems) to compensate for natural variability of renewable energy, thereby ensuring stability of grid frequency, and suppressing voltage rise caused by reverse power flow.

The concept of V2G is proposed to address the above issues, and its core idea is to use a large amount of electric vehicle energy storage as a buffer for the power grid and renewable energy. When load on the power grid is too high, electric vehicle energy storage feeds energy to the power grid; and when the load on the power grid is low, it is used to store excess electricity generated by the power grid, avoiding waste. In this way, electric vehicle users can buy electricity from the power grid when the electricity price is low, and sell electricity to the power grid when the power grid price is high, thereby obtaining certain profits.

At present, plug-in hybrid electric vehicles (PHEVs) and pure electric vehicles (EVs) are gradually entering the market. Due to large capacity batteries equipped on these cars, it is to be considered to provide energy buffering for the power grid when parked. As most cars are in a stopped state for most of every day, during which they represent an idle asset. When the number of these cars is large enough, total capacity of their batteries is quite enormous, so they can be used as a buffer for the power grid and renewable energy systems.

A typical V2G module includes an inverter which functions as a PFC rectifier during charging and an inverter during discharging, and a bidirectional DCDC which charges the battery during forward operation and discharges the battery during reverse operation. During discharging, the bidirectional DCDC converts energy into AC energy through the inverter and feeds back to the power grid. The current common practice is to obtain ± 400V through capacitor series connection, but when the load is unbalanced, additional circuits are required to balance the voltage of the capacitor series, which further increases costs and sacrifices efficiency. When batteries are charging, a charging circuit with positive and negative bus bars can be designed to achieve a certain balance. However, when the batteries are fully charged, the charging circuit will lose its balancing function.

### SUMMARY OF THE INVENTION

Therefore, a bidirectional V2G module with grid-connected and off-grid functionality is provided, which is able to prevent the charging circuit from losing balance function when the batters are fully charged.

A bidirectional V2G module with grid-connected and off-grid functionality is provided, which comprises a control circuit, a rectification inverter circuit, and a bidirectional DCDC conversion circuit. The rectification inverter circuit is respectively connected to a three-phase power grid and the bidirectional DCDC conversion circuit. The bidirectional DCDC conversion circuit is connected to the battery pack/BMS module.

The bidirectional DCDC conversion circuit comprises a transformer bank, a primary bus side circuit, and at least one secondary energy storage circuit. The transformer bank comprises at least one primary winding and at least one secondary winding, and both the primary winding and the secondary winding are arranged with a common magnetic core.

The primary bus side circuit comprises a power bus positive terminal VBUS+, a power bus negative terminal VBUS-, and a plurality of primary balance branches. Each primary balance branch includes a primary balance switching tube, a primary balance inductor, a primary energy storage capacitor, and a primary balance capacitor. The primary balance capacitors of the two branches are connected in series between the power bus positive terminal VBUS+ and the power bus positive terminal VBUS+, and are configured to automatically balance voltage of the power bus positive terminal VBUS+ and the power bus negative terminal VBUS-.

The secondary energy storage circuit comprises a secondary switching tube, a secondary energy storage capacitor, and a secondary energy storage inductor. The control circuit is configured to control conduction and turn off of each primary balance switching tube and each secondary balance switching tube, and the primary balance switching tubes synchronously switching, while the secondary balance switching tubes are proved with complementary switch to the corresponding primary balance switching tubes.

The rectification inverter circuit comprises three rectification and inverter branches, each of which comprises at least one group of parallel rectification and inverter switching tubes. each rectification and inverter branch is separately connected to a phase branch line in the three-phase power grid.

Preferably, the secondary energy storage circuit comprises a first secondary branch and a second secondary branch. The first secondary branch is separately connected to one end of the transformer secondary winding and the positive terminal VBAT+ of the battery pack/BMS module, and the second secondary branch is respectively connected to the other end of the transformer secondary winding and the negative terminal VBAT- of the battery pack/BMS module. The secondary energy storage capacitor and the secondary energy storage inductor are connected in series on the first or second secondary branch. One end of the secondary switching tube is connected between the secondary energy storage capacitor and the secondary energy storage inductor, and the other end of the secondary switching tube is connected to the positive terminal VBAT+ of the battery pack/BMS module or the negative terminal VBAT- of the battery pack/BMS module.

Preferably, the secondary energy storage circuit comprises a secondary filtering capacitor, a positive terminal of the secondary filtering capacitor is connected to the positive terminal VBAT+ of the battery pack/BMS module, and a negative terminal of the secondary filtering capacitor is connected to the negative terminal VBAT- of the battery pack/BMS module.

Preferably, the transformer bank comprises a first transformer T1 and a second transformer T2. The two transformers T1,T2 have a common magnetic core. The primary winding of the first transformer T1 is connected in series with the primary winding of the second transformer T2. A common-polarity terminal of the primary winding of the first transformer T1 is connected to the positive terminal VBUS+ of the power bus, and an opposite-polarity terminal of the primary winding of the second transformer T2 is connected to the negative terminal VBUS- of the power bus. The opposite-polarity terminal of the primary winding of the first transformer T1 is connected to the common-polarity terminal of the primary winding of the second transformer T2 and grounded.

The power bus side circuit comprises a first balancing branch and a second balancing branch. The first balancing branch comprises a first primary balancing capacitor C1, a first balancing inductor L1, a third primary energy storage capacitor C3, and a first primary balancing switching tube Q1. The second balancing branch comprises a second primary balancing capacitor C2, a second balancing inductor L2, a fourth primary energy storage capacitor C4, and a second primary balancing switching tube Q2. The positive terminal VBUS+ of the power bus, the first balanced inductor L1, the third primary energy storage capacitor C3, and the common-polarity terminal of the primary winding of the first transformer T1 are sequentially connected in series. The negative terminal VBUS- of the power bus, the second balanced inductor L2, the fourth primary energy storage capacitor C4, and the opposite-polarity terminal of the primary winding of the second transformer T2 are sequentially connected in series. One end of the first primary balance switching tube Q1 is connected between the first balanced inductor L1 and the third primary energy storage capacitor C3, the other end of the first primary balance switching tube Q1 is grounded, and one end of the second primary balance switching tube Q2 is connected between the second balanced inductor L2 and the fourth primary energy storage capacitor C4, the other end of the second primary balanced switching tube Q2 is grounded.

The control circuit is configured to separately control conduction and turn off of the first primary balance switching tube Q1, the second primary balance switching tube Q2, and the secondary balance switching tube.

The first primary balance switching tube Q1 and the second primary balance switching tube Q2 have a synchronously switching capability, the secondary switch is provided with a complementary switch to the first switching tube Q1, and the secondary switch is provided with a complementary switch to the second switching tube Q2.

Preferably, the first transformer T1 and the second transformer T2 are connected in parallel, and the opposite-polarity terminal of the secondary winding of the first transformer T1 and the opposite-polarity terminal of the secondary winding of the second transformer T2 are both connected to the positive terminal VBAT+ of the battery pack/BMS module. The common-polarity terminal of the secondary winding of the first transformer T1 and the common-polarity terminal of the secondary winding of the second transformer T2 are both connected to the negative pole VBAT - of the battery pack/BMS module.

In an alternative embodiment, the first transformer T1 and the second transformer T2 are connected in series, and the common-polarity terminal of the secondary winding of the first transformer T1 is connected to the opposite-polarity terminal of the secondary winding of the second transformer T2. The opposite-polarity terminal of the secondary winding of the first transformer T1 is connected to the positive terminal VBAT+ of the battery pack/BMS module, and the common-polarity terminal of the secondary winding of the second transformer T2 is connected to the negative terminal VBAT- of the battery pack/BMS module.

The bidirectional DCDC conversion circuit comprises a first secondary energy storage circuit, a second secondary energy storage circuit, a first relay K1, a second relay K2, and a third relay K3. The first secondary energy storage circuit comprises a first secondary branch and a second secondary branch, and the second secondary energy storage circuit comprises a third secondary branch and a fourth secondary branch.

The first secondary branch is respectively connected to the opposite-polarity terminal of the secondary winding of the first transformer T1 and the positive terminal VBAT+ of the battery pack/BMS module. The first secondary branch is connected to the third secondary branch through the second relay K2, and the second secondary branch is connected to the common-polarity terminal of the secondary winding of the first transformer T1. The second secondary branch is connected to the negative terminal VBAT- of the battery pack/BMS module through the third relay K3.

The third secondary branch is connected to the opposite-polarity terminal of the secondary winding of the second transformer T2. The third secondary branch is connected to the positive terminal VBAT+ of the battery pack/BMS module through the first relay K1. The fourth secondary branch is respectively connected to the common-polarity terminal of the secondary winding of the second transformer T2 and the negative terminal VBAT- of the battery pack/BMS module.

The rectification inverter circuit comprises a three-phase six-switch circuit, and the three-phase electricity of the power grid includes power grid A-phase VA, power grid B-phase VB, and power grid C-phase VC. The A-phase VA of the power grid is connected to one end of a third inductor L3, and the other end of the third inductor L3 is connected to the positive terminal VBUS+ of the power bus through a fourth primary switching tube Q4. The other end of the third inductor L3 is connected to the negative terminal VBUS- of the power bus through the seventh primary switching tube Q7.

The B-phase VB of the power grid is connected to one end of a fourth inductor L4, and the other end of the fourth inductor L4 is connected to the positive terminal VBUS+ of the power bus through a fifth primary switching tube Q5. The other end of the fourth inductor L4 is further connected to the negative terminal VBUS - of the power bus through an eighth primary switching tube Q8. The C-phase VC of the power grid is connected to one end of a fifth inductor L5, and the other end of the fifth inductor L5 is connected to the positive terminal VBUS+ of the power bus through a sixth primary switching tube Q6. The other end of the fifth inductor L5 is further connected to the negative terminal VBUS- of the power bus through a ninth primary switching tube Q9.

In a preferred embodiment, the rectification inverter circuit comprises an I-type three-level circuit. The A-phase VA of the power grid is connected to one end of the third inductor L3, and the other end of the third inductor L3 is connected to the positive terminal VBUS+ of the power bus through the fourth primary side switching tube Q4 and a seventeenth primary side switching tube Q17. The fourth primary side switching tube Q4 and the seventeenth primary side switching tube Q17 are grounded through a third diode D3, and the positive terminal of the third diode D3 is grounded. The negative terminal of the third diode D3 is connected between the fourth primary side switching tube Q4 and the seventeenth primary side switching tube Q17, and the other end of the third inductor L3 is further connected to the negative terminal VBUS- of the power bus through a seventh primary switching tube Q7 and a twentieth primary switching tube Q20. The seventh primary switching tube Q7 and the twentieth primary switching tube Q20 are grounded through the fourth diode D4. The positive terminal of the fourth diode D4 is connected between the seventh primary switching tube Q7 and the twentieth primary switching tube Q20, and the negative terminal of the fourth diode D4 is grounded.

The B-phase VB of the power grid is connected to one end of the fourth inductor L4, and the other end of the fourth inductor L4 is connected to the positive terminal VBUS+ of the power bus through the fifth primary side switching tube Q5 and a sixteenth primary side switching tube Q16. The fifth primary side switching tube Q5 and the sixteenth primary side switching tube Q16 are grounded through the first diode D1, and the positive terminal of the first diode D1 is grounded. The negative pole of the first diode D4 is connected between the fifth primary side switching tube Q5 and the sixteenth primary side switching tube Q16, and the other end of the fourth inductor L4 is further connected to the negative pole VBUS- of the power bus through the eighth primary side switching tube Q8 and a nineteenth primary switching tube Q19, and the eighth primary switching tube Q8 and the nineteenth primary switching tube Q19 are grounded through a second diode D2. The positive terminal of the second diode D2 is connected between the eighth primary switching tube Q8 and the nineteenth primary switching tube Q19, and the negative terminal of the second diode D2 is grounded.

The B-phase VB of the power grid is connected to one end of the fourth inductor L4, and the other end of the fourth inductor L4 is connected to the positive terminal VBUS+of the power bus through the fifth primary side switching tube Q5 and the sixteenth primary side switching tube Q16. The fifth primary side switching tube Q5 and the sixteenth primary side switching tube Q16 are grounded through the first diode D1, and the positive terminal of the first diode D1 is grounded. The negative pole of the first diode D4 is connected between the fifth primary side switching tube Q5 and the sixteenth primary side switching tube Q16, and the other end of the fourth inductor L4 is also connected to the eighth primary side switching tube Q8. The nineteenth primary switching tube Q19 is connected to the negative pole VBUS-of the power bus, and the eighth primary switching tube Q8 and the nineteenth primary switching tube Q19 are grounded through a second diode D2, The positive terminal of the second diode D2 is connected between the eighth primary switching tube Q8 and the nineteenth primary switching tube Q19, and the negative terminal of the second diode D2 is grounded.

The power grid C-phase VC is connected to one end of the fifth inductor L5, and the other end of the fifth inductor L5 is connected to the positive terminal VBUS+ of the power bus through a sixth primary switching tube Q6 and an eighteenth primary switching tube Q18. The sixth primary switching tube Q6 and the eighteenth primary switching tube Q18 are grounded through the fifth diode D5, and the positive terminal of the fifth diode D5 is grounded. The negative terminal of the fifth diode D5 is connected between the sixth primary switching tube Q6 and the eighteenth primary switching tube Q18, and the other end of the fifth inductor L5 is further connected to the negative terminal VBUS- of the power bus through the ninth primary switching tube Q9 and a twenty-first primary switching tube Q21. The ninth primary switching tube Q9 and the twenty-first primary switching tube Q21 are grounded through a sixth diode D6, The positive terminal of the sixth diode D6 is connected between the ninth primary switching tube Q9 and the twenty-first primary switching tube Q21, and the negative terminal of the sixth diode D6 is grounded.

Preferably, the rectification inverter circuit further comprises a T-type three-level circuit. The A-phase VA of the power grid is connected to one end of the third inductor L3, and the other end of the third inductor L3 is connected to the positive terminal VBUS+ of the power bus through the fourth primary switching tube Q4. The other end of the third inductor L3 is further grounded through a tenth primary switching tube Q10 and an eleventh primary switching tube Q11. The B-phase VB of the power grid is connected to one end of the fourth inductor L4, and the other end of the fourth inductor L4 is connected to the positive terminal VBUS+ of the power bus through the fifth primary switching tube Q5. The other end of the fourth inductor L4 is further grounded through a twelfth primary switching tube Q12 and a thirteenth primary switching tube Q13. The C-phase VC of the power grid is connected to one end of the fifth inductor L5, and the other end of the fifth inductor L5 is connected to the positive terminal VBUS+ of the power bus through the sixth primary switching tube Q6. The other end of the fifth inductor L5 is further grounded through a fourteenth primary switching tube Q14 and a fifteenth primary switching tube Q15.

The above-mentioned bidirectional V2G module with grid-connected and off-grid functionality has obvious advantages and beneficial effects compared to traditional technologies. Specifically, according to the above content, the module mainly comprises a control circuit, a rectification inverter circuit, and a bidirectional DCDC conversion circuit. The rectification inverter circuit is separately connected to a three-phase power grid and the bidirectional DCDC conversion circuit. The bidirectional DCDC conversion circuit is connected to a battery pack/BMS module. The bidirectional DCDC conversion circuit mainly includes a transformer bank, a primary busbar side circuit, and a secondary energy storage circuit. The primary balancing capacitors are arranged in series between the positive terminal VBUS+ of the power bus and the positive terminal VBUS+ of the power bus. The primary balancing capacitors are configured to automatically balance the voltage of the positive terminal VBUS+ and the negative pole VBUS- of the power bus. The control circuit is configured to control conduction and turn off of the primary balance switching tubes and the secondary switching tubes. Thus, the above-mentioned bidirectional V2G module at least has the following advantageous:

1. It is able to prevent the charging circuit from losing balance function when the batters are fully charged;

2. Simple topology, low cost, and capable of replacing traditional LLC+ buck/boost circuits;

3. It is able to effectively balance capacitor voltage regardless of load size, even under no-load conditions;

4. Even if the upper and lower capacitors of the busbar are connected across different loads, voltage of the two capacitors can still be balanced.

In order to clarify structural features and efficacy of the present invention, a detailed explanation of the present invention is provided as follows in conjunction with the accompanying drawings and specific embodiments.

### BRIEF DESCRIPTION OF DRAWINGS

FIG. 1 is a schematic diagram of the bidirectional V2G module connection for the off grid function of an embodiment of the present invention.
FIG. 2 is a circuit schematic diagram of the bidirectional V2G module with parallel off grid function in the first embodiment of the present invention.
FIG. 3 is a circuit schematic diagram of a bidirectional V2G module with parallel off grid function in the second embodiment of the present invention.
FIG. 4 is a circuit schematic diagram of a bidirectional V2G module with parallel off grid function in the third embodiment of the present invention.
FIG. 5 is a circuit schematic diagram of the bidirectional V2G module with parallel off grid function in the fourth embodiment of the present invention.
FIG. 6 is a circuit schematic diagram of a bidirectional V2G module with parallel off grid function in the fifth embodiment of the present invention.
FIG. 7 is a circuit schematic diagram of a bidirectional V2G module with parallel off grid function in the sixth embodiment of the present invention.

Abbreviations and terminology definitions:
DCDC : DC to DC conversion
Buck/Boost : Buck/Boost circuit
LLC : Inductor-Inductor-Capacitor, namely Isolated frequency modulation converter circuit
IGBT : Insulated Gate Bipolar Transistor, a power semiconductor device
MOSFET : Metal-Oxide-Semiconductor Field-Effect Transistor
PFC : Power Factor Correction
V2G : Vehicle to Grid
G2V : Grid to Vehicle

The foregoing and other exemplary purposes, aspects and advantages of the present invention will be better understood in principle from the following detailed description of one or more exemplary embodiments of the invention with reference to the embodiment(s) and accompanied drawings. It is understood to one skilled in the art that the following description with reference to the embodiment(s) and accompanied drawings is merely to explain concepts and principals of the present invention but should not be seemed as limitation to the scope of the present invention.

It is to be noted that all directional indications (for example, upper, lower, left, right, front, back, and the like) in the embodiments of the present disclosure are merely used for explaining relative position relations, moving conditions, and the like among components in a certain special gesture (as shown in the drawings). If the special gesture changes, the directional indications will change correspondingly.

In addition, the descriptions such as "first" and "second" are merely used for a description purpose rather than being construed as indicating or implying relative importance or implicitly indicating the quantity of indicated technical features. Thus, features defined by "first" and "second" may expressively or implicitly indicate the inclusion of at least one said feature. In the description of the present disclosure, unless otherwise specified, "a plurality of" means at least two, for example, two, three, and the like.

In the present disclosure, unless otherwise specified and defined, the terms "connect", "fix", and the like shall be understood in a broad sense. For example, "fix" can be fixedly connection or detachable connection or integrated connection; mechanical connection or electrical connection; or direct connection or indirect connection through an intermedium, and internal communication of two components or an interactive relationship of the two components, unless otherwise defined. Those of ordinary skill in the art may understand the specific meanings of the terms in the present disclosure under specific circumstances.

In addition, the technical solutions of the embodiments of the present disclosure may be combined with one another based on implementation by those of ordinary skill in the art. When the technical solutions contradict each other in combination or may not be realized, it is to be considered that there is no combination of the technical solutions, which shall not fall into the protection scope of the present disclosure.

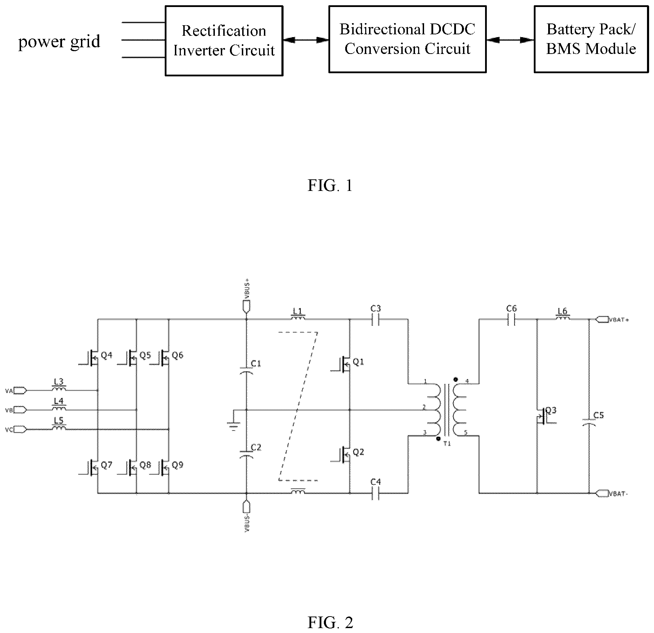

Referring to FIG. 1 through FIG. 7, a bidirectional V2G module with grid-connected and off-grid functionality is illustrated, which comprises a control circuit, a rectification inverter circuit, and a bidirectional DCDC conversion circuit. The rectification inverter circuit is respectively connected to a three-phase power grid and the bidirectional DCDC conversion circuit. The bidirectional DCDC conversion circuit is connected to the battery pack/BMS (referred to as Battery Management System) module.

The bidirectional DCDC conversion circuit comprises a transformer bank, a primary bus side circuit, and at least one secondary energy storage circuit. The transformer bank comprises at least one primary winding and at least one secondary winding, and both the primary winding and the secondary winding are arranged with a common magnetic core.

The primary bus side circuit comprises a power bus positive terminal VBUS+, a power bus negative terminal VBUS-, and a plurality of primary balance branches. Each primary balance branch comprises a primary balance switching tube, a primary balance inductor, a primary energy storage capacitor, and a primary balance capacitor, the primary balance capacitors of the two branches are connected in series between the power bus positive terminal VBUS+ and the power bus positive terminal VBUS+, and are configured to automatically balance voltage of the power bus positive terminal VBUS+ and the power bus negative terminal VBUS-.

The secondary energy storage circuit comprises a secondary switching tube, a secondary energy storage capacitor, and a secondary energy storage inductor. The control circuit is configured to control conduction and turn off of each primary balance switching tube and each secondary balance switching tube, and the primary balance switching tubes synchronously switching while the secondary balance switching tubes are proved with complementary switch to the corresponding primary balance switching tubes.

The rectification inverter circuit comprises three rectification and inverter branches, each of which comprises at least one group of parallel rectification and inverter switching tubes. each rectification and inverter branch is separately connected to a phase branch line in the three-phase power grid. For example, a first rectification and inverter branch is connected to the A-phase branch of the three-phase power supply, the second rectification and inverter branch is connected to the B-phase branch of the three-phase power supply, and the third rectification and inverter branch is connected to the C-phase branch of the three-phase power supply.

### Embodiment 1

Referring to FIG. 2, the secondary energy storage circuit comprises a first secondary branch and a second secondary branch. The first secondary branch is separately connected to one end of the transformer secondary winding and the positive terminal VBAT+ of the battery pack/BMS module, and the second secondary branch is respectively connected to the other end of the transformer secondary winding and the negative terminal VBAT- of the battery pack/BMS module. The secondary energy storage capacitor and the secondary energy storage inductor are connected in series on the first or second secondary branch. One end of the secondary switching tube is connected between the secondary energy storage capacitor and the secondary energy storage inductor, and the other end of the secondary switching tube is connected to the positive terminal VBAT+ of the battery pack/BMS module or the negative terminal VBAT- of the battery pack/BMS module. In this embodiment, the secondary energy storage capacitor and the secondary energy storage inductor are connected in series on the first secondary branch, and the other end of the secondary switching tube is connected to the negative terminal VBAT- of the battery pack/BMS modul. In an alternative embodiment, the secondary energy storage capacitor and the secondary energy storage inductor are connected in series on the second secondary branch.

Specifically, the secondary energy storage circuit comprises a secondary filtering capacitor, a positive terminal of the secondary filtering capacitor is connected to the positive terminal VBAT+ of the battery pack/BMS module, and a negative terminal of the secondary filtering capacitor is connected to the negative terminal VBAT- of the battery pack/BMS module.

Specifically, the transformer bank comprises a first transformer T1 and a second transformer T2. The two transformers T1,T2 have a common magnetic core. The primary winding of the first transformer T1 is connected in series with the primary winding of the second transformer T2. A common-polarity terminal of the primary winding of the first transformer T1 is connected to the positive terminal VBUS+ of the power bus, and an opposite-polarity terminal of the primary winding of the second transformer T2 is connected to the negative terminal VBUS- of the power bus. The opposite-polarity terminal of the primary winding of the first transformer T1 is connected to the common-polarity terminal of the primary winding of the second transformer T2 and grounded.

Preferably, the power bus side circuit comprises a first balancing branch and a second balancing branch. The first balancing branch comprises a first primary balancing capacitor C1, a first balancing inductor L1, a third primary energy storage capacitor C3, and a first primary balancing switching tube Q1. The second balancing branch comprises a second primary balancing capacitor C2, a second balancing inductor L2, a fourth primary energy storage capacitor C4, and a second primary balancing switching tube Q2. The positive terminal VBUS+ of the power bus, the first balanced inductor L1, the third primary energy storage capacitor C3, and the common-polarity terminal of the primary winding of the first transformer T1 are sequentially connected in series. The negative terminal VBUS- of the power bus, the second balanced inductor L2, the fourth primary energy storage capacitor C4, and the opposite-polarity terminal of the primary winding of the second transformer T2 are sequentially connected in series. One end of the first primary balance switching tube Q1 is connected between the first balanced inductor L1 and the third primary energy storage capacitor C3, the other end of the first primary balance switching tube Q1 is grounded, and one end of the second primary balance switching tube Q2 is connected between the second balanced inductor L2 and the fourth primary energy storage capacitor C4, the other end of the second primary balanced switching tube Q2 is grounded. The first primary balancing capacitor C1 and the second primary balancing capacitor C2 are connected between the positive terminal VBUS+of the power bus, preferably in series, and the negative terminal VBUS- of the power bus, and a connection line between the first primary balancing capacitor C1 and the second primary balancing capacitor C2 is grounded.

The central tap of the primary winding of the first transformer T1 is grounded, or the opposite-polarity terminal of the primary winding of the first transformer T1 is connected in series with the common-polarity terminal of the primary winding of the second transformer T2 and both terminals are grounded.

The control circuit is configured to separately control conduction and turn off of the first primary balance switching tube Q1, the second primary balance switching tube Q2, and the secondary balance switching tube.

The first balanced inductor L1 and the second balanced inductor L2 could be coupled, or optionally not be coupled. The first primary balance switching tube Q1 and the second primary balance switching tube Q2 have a synchronously switching capability, the secondary switching tube is provided with a complementary switch to the first switching tube Q1, and the secondary switching tube is provided with a complementary switch to the second switching tube Q2.

### Embodiment 2

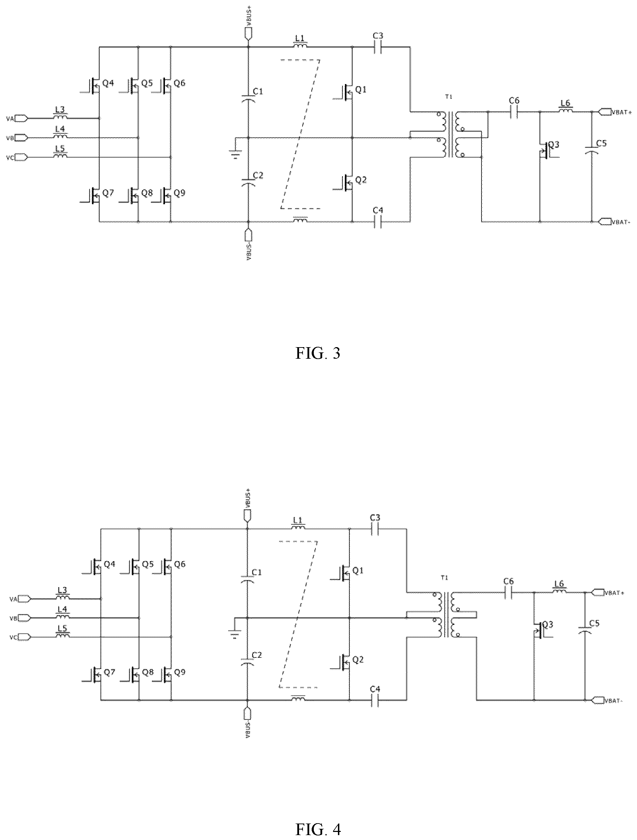

Referring FIG. 3, the first transformer T1 and the second transformer T2 are connected in parallel, and the opposite-polarity terminal of the secondary winding of the first transformer T1 and the opposite-polarity terminal of the secondary winding of the second transformer T2 are connected to the positive terminal VBAT+ of the battery pack/BMS module through one corresponding first secondary branch, respectively. The common-polarity terminal of the secondary winding of the first transformer T1 and the common-polarity terminal of the secondary winding of the second transformer T2 are connected to the negative pole VBAT- of the battery pack/BMS module through one corresponding second secondary branch, respectively. In this embodiment, a sixth secondary energy storage capacitor C6 and a sixth secondary energy storage inductor L6 are applied on the first secondary branch. The opposite-polarity terminal of the secondary winding of the first transformer T1, the secondary energy storage capacitor C6, the secondary energy storage inductor L6, and the positive terminal VBAT+ of the battery pack/BMS module are sequentially connected. One end of the third secondary switching tube Q3 is connected between the sixth secondary energy storage capacitor C6 and the sixth secondary energy storage inductor L6, and the other end is connected to the negative pole VBAT- of the battery pack/BMS module. The third secondary switching tube Q3 and the first primary balance switching tube Q1 are proved with complementary switching capabilities. The third secondary switching tube Q3 and the second primary balance switching tube Q2 are proved with complementary switching capabilities.

### Embodiment 3

Referring FIG. 4, in an alternative embodiment, the first transformer T1 and the second transformer T2 are connected in series, and the common-polarity terminal of the secondary winding of the first transformer T1 is connected to the opposite-polarity terminal of the secondary winding of the second transformer T2. The opposite-polarity terminal of the secondary winding of the first transformer T1 is connected to the positive terminal VBAT+ of the battery pack/BMS module, and the common-polarity terminal of the secondary winding of the second transformer T2 is connected to the negative terminal VBAT- of the battery pack/BMS module. In this embodiment, the secondary energy storage capacitor C6 and the secondary energy storage inductor L6 are arranged on the first secondary branch. The opposite-polarity terminal of the secondary winding of the first transformer T1, the secondary energy storage capacitor C6, the secondary energy storage inductor L6, and the positive pole VBAT+of the battery pack/BMS module are connected in sequence. One end of the third secondary switching tube Q3 is connected between the sixth secondary energy storage capacitor C6 and the sixth secondary energy storage inductor L6, and the other end of the third secondary switching tube Q3 is connected to the negative terminal VBAT- of the battery pack/BMS module. The third secondary switching tube Q3 is complementary to the first primary balance switching tube Q1. The third side switching tube Q3 and the second primary balance switching tube Q2 are proved with complementary switching capabilities.

### Embodiment 4

Referring FIG. 4, the bidirectional DCDC conversion circuit comprises a first secondary energy storage circuit, a second secondary energy storage circuit, a first relay K1, a second relay K2, and a third relay K3. The first secondary energy storage circuit comprises a first secondary branch and a second secondary branch, and the second secondary energy storage circuit comprises a third secondary branch and a fourth secondary branch.

The first secondary branch is separately connected to the opposite-polarity terminal of the secondary winding of the first transformer T1 and the positive terminal VBAT+ of the battery pack/BMS module. The first secondary branch is connected to the third secondary branch through the second relay K2, and the second secondary branch is connected to the common-polarity terminal of the secondary winding of the first transformer T1. The second secondary branch is connected to the negative terminal VBAT- of the battery pack/BMS module through the third relay K3.

The third secondary branch is connected to the opposite-polarity terminal of the secondary winding of the second transformer T2. The third secondary branch is connected to the positive terminal VBAT+ of the battery pack/BMS module through the first relay K1. The fourth secondary branch is separately connected to the common-polarity terminal of the secondary winding of the second transformer T2 and the negative terminal VBAT- of the battery pack/BMS module.

In this embodiment, an eighth secondary energy storage capacitor C8 and a seventh secondary energy storage inductor L7 are connected in series on the first secondary branch. One end of a twenty-second secondary switching tube Q22 is connected between the eighth secondary energy storage capacitor C8 and the seventh secondary energy storage inductor L7, and the other end of the twenty second secondary switching tube Q22 is connected to the second secondary branch. The sixth secondary energy storage capacitor C6 and the sixth secondary energy storage inductor L6 are connected in series on the third side branch. One end of a twenty third secondary switching tube Q23 is connected between the sixth secondary energy storage capacitor C6 and the sixth secondary energy storage inductor L6, and the other end of the twenty third secondary switching tube Q23 is connected to the negative terminal VBAT- of the battery pack/BMS module. The first primary secondary balance switching tube Q1 and the second primary secondary balance switching tube Q2 are provided with a synchronous switching capability, the twenty second secondary switching tube Q22 and the twenty third secondary switching tube Q23 are provided with a synchronous switching capability, and the twenty second secondary switching tube Q22 and the first primary secondary balance switching tube Q1 are provided with a complementary switching capability. The twenty third secondary switching tube Q23 and the second primary balance switching tube Q2 are provided with a complementary switching capability. In this way, the secondary side is switched in series and parallel through the relays to achieve wide range and efficient output voltage regulation.

Specifically, when the first secondary energy storage circuit is connected in series with the second secondary energy storage circuit, the first relay K1 is closed, and the second relay K2 and the third relay K3 are disconnected; and when the first secondary energy storage circuit is connected in parallel with the second secondary energy storage circuit, the first relay K1 is disconnected, and the second relay K2 and the third relay K3 are closed.

### Embodiment 5

Referring FIG. 1, the rectification inverter circuit comprises a three-phase six-switch circuit, and the three-phase electricity of the power grid includes a power grid A-phase VA, a power grid B-phase VB, and a power grid C-phase VC. The A-phase VA of the power grid is connected to one end of a third inductor L3, and the other end of the third inductor L3 is connected to the positive terminal VBUS+ of the power bus through a fourth primary switching tube Q4. The other end of the third inductor L3 is further connected to the negative terminal VBUS- of the power bus through the seventh primary switching tube Q7.

The B-phase VB of the power grid is connected to one end of a fourth inductor L4, and the other end of the fourth inductor L4 is connected to the positive terminal VBUS+ of the power bus through a fifth primary switching tube Q5. The other end of the fourth inductor L4 is further connected to the negative terminal VBUS- of the power bus through an eighth primary switching tube Q8. The C-phase VC of the power grid is connected to one end of a fifth inductor L5, and the other end of the fifth inductor L5 is connected to the positive terminal VBUS+ of the power bus through a sixth primary switching tube Q6. The other end of the fifth inductor L5 is further connected to the negative terminal VBUS- of the power bus through a ninth primary switching tube Q9.

### Embodiment 6

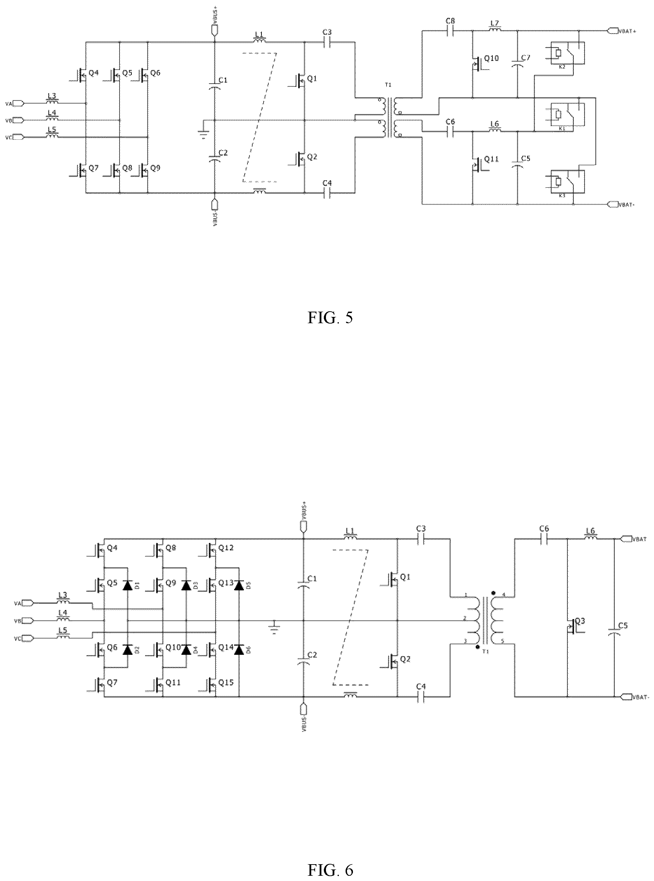

Referring FIG. 6, in a preferred embodiment, the rectification inverter circuit comprises an I-type three-level circuit. The A-phase VA of the power grid is connected to one end of the third inductor L3, and the other end of the third inductor L3 is connected to the positive terminal VBUS+ of the power bus through the fourth primary side switching tube Q4 and a seventeenth primary side switching tube Q17. The fourth primary side switching tube Q4 and the seventeenth primary side switching tube Q17 are grounded through a third diode D3, and the positive terminal of the third diode D3 is grounded. The negative terminal of the third diode D3 is connected between the fourth primary side switching tube Q4 and the seventeenth primary side switching tube Q17. The other end of the third inductor L3 is further connected to the negative terminal VBUS- of the power bus through a seventh primary switching tube Q7 and a twentieth primary switching tube Q20. The seventh primary switching tube Q7 and the twentieth primary switching tube Q20 are grounded through the fourth diode D4. The positive terminal of the fourth diode D4 is connected between the seventh primary switching tube Q7 and the twentieth primary switching tube Q20, and the negative terminal of the fourth diode D4 is grounded.

The B-phase VB of the power grid is connected to one end of the fourth inductor L4, and the other end of the fourth inductor L4 is connected to the positive terminal VBUS+ of the power bus through a fifth primary side switching tube Q5 and a sixteenth primary side switching tube Q16. The fifth primary side switching tube Q5 and the sixteenth primary side switching tube Q16 are grounded through the first diode D1, and the positive terminal of the first diode D1 is grounded. The negative pole of the first diode D4 is connected between the fifth primary side switching tube Q5 and the sixteenth primary side switching tube Q16, and the other end of the fourth inductor L4 is further connected to the negative pole VBUS- of the power bus through the eighth primary side switching tube Q8 and a nineteenth primary switching tube Q19, and the eighth primary switching tube Q8 and the nineteenth primary switching tube Q19 are grounded through a second diode D2. The positive terminal of the second diode D2 is connected between the eighth primary switching tube Q8 and the nineteenth primary switching tube Q19, and the negative terminal of the second diode D2 is grounded.

The power grid C-phase VC is connected to one end of the fifth inductor L5, and the other end of the fifth inductor L5 is connected to the positive terminal VBUS+ of the power bus through a sixth primary switching tube Q6 and an eighteenth primary switching tube Q18. The sixth primary switching tube Q6 and the eighteenth primary switching tube Q18 are grounded through the fifth diode D5, and the positive terminal of the fifth diode D5 is grounded. The negative terminal of the fifth diode D5 is connected between the sixth primary switching tube Q6 and the eighteenth primary switching tube Q18, and the other end of the fifth inductor L5 is further connected to the negative terminal VBUS- of the power bus through the ninth primary switching tube Q9 and a twenty-first primary switching tube Q21. The ninth primary switching tube Q9 and the twenty-first primary switching tube Q21 are grounded through a sixth diode D6, The positive terminal of the sixth diode D6 is connected between the ninth primary switching tube Q9 and the twenty-first primary switching tube Q21, and the negative terminal of the sixth diode D6 is grounded.

### Embodiment 7

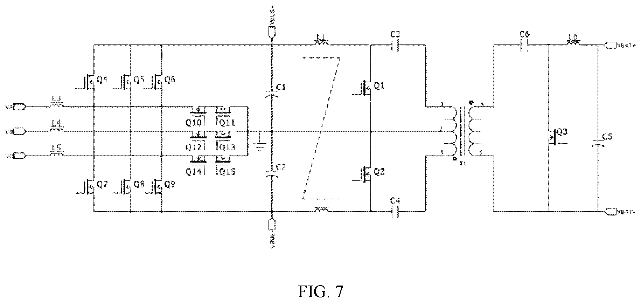

Referring FIG. 7, the rectification inverter circuit further comprises a T-type three-level circuit. The A-phase VA of the power grid is connected to one end of the third inductor L3, and the other end of the third inductor L3 is connected to the positive terminal VBUS+ of the power bus through the fourth primary switching tube Q4. The other end of the third inductor L3 is further grounded through a tenth primary switching tube Q10 and an eleventh primary switching tube Q11. The B-phase VB of the power grid is connected to one end of the fourth inductor L4, and the other end of the fourth inductor L4 is connected to the positive terminal VBUS+ of the power bus through the fifth primary switching tube Q5. The other end of the fourth inductor L4 is further grounded through a twelfth primary switching tube Q12 and a thirteenth primary switching tube Q13. The C-phase VC of the power grid is connected to one end of the fifth inductor L5, and the other end of the fifth inductor L5 is connected to the positive terminal VBUS+ of the power bus through the sixth primary switching tube Q6. The other end of the fifth inductor L5 is further grounded through a fourteenth primary switching tube Q14 and a fifteenth primary switching tube Q15.

In this embodiment, a drain of the tenth transistor Q10 is connected to the third inductor L3, a source of the tenth transistor Q10 is connected to a source of the eleventh transistor Q11, a drain of the eleventh transistor Q11 is grounded, a drain of the twelfth transistor Q12 is connected to the fourth inductor L4, a source of the twelfth transistor Q12 is connected to a source of the thirteenth transistor Q13, a drain of the thirteenth transistor Q13 is grounded, a drain of the fourteenth transistor Q14 is connected to the fifth inductor L5, and a source of the fourteenth transistor Q14 is connected to the fifteenth inductor L4. A source of the primary switch Q15 is connected, and the drain of the fifteenth primary switch Q15 is grounded.

In theese embodiments mentioned above, each of the switching tube, namely switching transistors, is a MOSFET power transistor, or alternatively other switching transistors, and the control circuit is connected to the corresponding control terminals of each switching tube and each relay.

### Working principle:

The bidirectional V2G module with grid-connected and off-grid functionality converts three-phase AC power to DC power or vice versa is provided with rectification and inverter circuits to converting three-phase AC power to DC power, or converting three-phase DC power to AC power.

The bidirectional V2G module with grid-connected and off-grid functionality performs buck operation of voltage (Buck) as follows.

The first primary balance switching tube Q1 and the second primary balance switching tube Q2 switch synchronously, and the secondary switching tube switches complementarily with the first primary balance switching tube Q1 and the second primary balance switching tube Q2. Specifically, when the first primary balance switching tube Q1 and the second primary balance switching tube Q2 are turned on, the secondary switching tube is turned off. The first balance inductor L1 stores energy through the first primary balance switching tube Q1 and the second primary balance switching tube Q2. The first transformer T1, the third primary energy storage capacitor C3, and the fourth primary energy storage capacitor C4 are reset, and the secondary winding of the first transformer T1 is at a high level. The energy of the capacitor is transferred to an output terminal through the secondary energy storage inductor L6.

When the first primary balance switching tube Q1 and the second primary balance switching tube Q2 are turned off, the secondary switching tube is turned on, and the energy of the first balance inductor L1 charges the third primary energy storage capacitor C3, the fourth primary energy storage capacitor C4, and the sixth secondary energy storage capacitor C6. The secondary energy storage inductor L6 freewheels current through the secondary switching tube.

The first primary balance switching tube Q1 and the second primary balance switching tube Q2 are driven and controlled by the same drive group. When there is a load on the output, the secondary side is connected together because they are coupled through the same transformer. When the voltage of the two capacitors above and below connected at the primary bus is unequal, the energy of the upper capacitor will be preferentially transferred to the secondary side, thereby achieving automatic balancing of the bus voltage.

When there is no load output, traditional LLC circuits cannot balance the bus capacitor. However, in this present circuit, due to the shared secondary switching tubes, even if there is no load output on the secondary side, the energy on the side of the capacitor with a high volume will pass through the transformer to the secondary side, and then return to the side of the original bus with a low volume across the secondary side, thereby completing the voltage balance of the two capacitors on the bus.

The bidirectional V2G module with grid-connected and off-grid functionality performs boost operation of voltage (Boost) as follows.

When the secondary switching tube is turned on, the first primary balance switching tube Q1 and the second primary balance switching tube Q2 are turned off, and the battery energy is transferred to the bus side through the third primary energy storage capacitor C3, the fourth primary energy storage capacitor C4, and the first balance inductor L1, where the first balance inductor L1 stores energy.

When the secondary side switch is turned off, the first primary balance switching tube Q1 and the second primary balance switching tube Q2 are turned on, the first balance inductor L1 freewheels current, and energy is released to the bus side. The third primary energy storage capacitor C3, the fourth primary energy storage capacitor C4, and the transformer group are reset.

The above-mentioned bidirectional V2G module with grid-connected and off-grid functionality has obvious advantages and beneficial effects compared to traditional technologies. Specifically, according to the above content, the module mainly comprises a control circuit, a rectification inverter circuit, and a bidirectional DCDC conversion circuit. The rectification inverter circuit is separately connected to a three-phase power grid and the bidirectional DCDC conversion circuit. The bidirectional DCDC conversion circuit is connected to a battery pack/BMS module. The bidirectional DCDC conversion circuit mainly includes a transformer bank, a primary busbar side circuit, and a secondary energy storage circuit. The primary balancing capacitors are arranged in series between the positive terminal VBUS+ of the power bus and the positive terminal VBUS+ of the power bus. The primary balancing capacitors are configured to automatically balance the voltage of the positive terminal VBUS+ and the negative pole VBUS- of the power bus. The control circuit is configured to control conduction and turn off of the primary balance switching tubes and the secondary switching tubes. Thus, the above-mentioned bidirectional V2G module at least has the following advantageous:
1. It is able to prevent the charging circuit from losing balance function when the batters are fully charged;
2. Simple topology, low cost, and capable of replacing traditional LLC+ buck/boost circuits;
3. It is able to effectively balance capacitor voltage regardless of load size, even under no-load conditions;
4. Even if the upper and lower capacitors of the busbar are connected across different loads, voltage of the two capacitors can still be balanced.

The above is only a preferred embodiment of the disclosure and does not impose any formal limitations on it. Therefore, any simple modifications, equivalent changes, and modifications made to the above embodiments based on the technical essence of the disclosure, which are not separated from the technical solution of the disclosure, shall fall within the scope of protection of the technical solution of the disclosure.

## Claims

1. A bidirectional V2G module with grid-connected and off-grid functionality, comprising a control circuit, a rectification inverter circuit, and a bidirectional DCDC conversion circuit, wherein the rectification inverter circuit is respectively connected to a three-phase power grid and the bidirectional DCDC conversion circuit, the bidirectional DCDC conversion circuit is connected to the battery pack/BMS module;
the bidirectional DCDC conversion circuit comprises a transformer bank, a primary bus side circuit, and at least one secondary energy storage circuit, the transformer bank comprises at least one primary winding and at least one secondary winding, and both the primary winding and the secondary winding are arranged with a common magnetic core;
the primary bus side circuit comprises a power bus positive terminal VBUS+, a power bus negative terminal VBUS-, and a plurality of primary balance branches, each primary balance branch comprises a primary balance switching tube, a primary balance inductor, a primary energy storage capacitor, and a primary balance capacitor, the primary balance capacitors of the two branches are connected in series between the power bus positive terminal VBUS+ and the power bus positive terminal VBUS+, and are configured to automatically balance voltage of the power bus positive terminal VBUS+ and the power bus negative terminal VBUS-;
the secondary energy storage circuit comprises a secondary switching tube, a secondary energy storage capacitor, and a secondary energy storage inductor;
the control circuit is configured to control conduction and turn off of each primary balance switching tube and each secondary balance switching tube, and the primary balance switching tubes synchronously switching while the secondary balance switching tubes are proved with complementary switch to the corresponding primary balance switching tubes; and
the rectification inverter circuit comprises three rectification and inverter branches, each of which comprises at least one group of parallel rectification and inverter switching tubes, each rectification and inverter branch is separately connected to a phase branch line in the three-phase power grid.

2. The bidirectional V2G module with grid-connected and off-grid functionality according to claim 1, wherein the secondary energy storage circuit comprises a first secondary branch and a second secondary branch, the first secondary branch is separately connected to one end of the transformer secondary winding and a positive terminal VBAT+ of the battery pack/BMS module, and the second secondary branch is separately connected to the other end of the transformer secondary winding and a negative terminal VBAT- of the battery pack/BMS module, the secondary energy storage capacitor and the secondary energy storage inductor are connected in series on the first or second secondary branch, one end of the secondary switching tube is connected between the secondary energy storage capacitor and the secondary energy storage inductor, and the other end of the secondary switching tube is connected to the positive terminal VBAT+ of the battery pack/BMS module or the negative terminal VBAT- of the battery pack/BMS module.

3. The bidirectional V2G module with grid-connected and off-grid functionality according to claim 1, wherein the secondary energy storage circuit comprises a secondary filtering capacitor, a positive terminal of the secondary filtering capacitor is connected to the positive terminal VBAT+ of the battery pack/BMS module, and a negative terminal of the secondary filtering capacitor is connected to the negative terminal VBAT- of the battery pack/BMS module.

4. The bidirectional V2G module with grid-connected and off-grid functionality according to claim 2, wherein the transformer bank comprises a first transformer T1 and a second transformer T2, the two transformers T1,T2 have a common magnetic core; the primary winding of the first transformer T1 is connected in series with the primary winding of the second transformer T2, a common-polarity terminal of the primary winding of the first transformer T1 is connected to the positive terminal VBUS+ of the power bus; an opposite-polarity terminal of the primary winding of the second transformer T2 is connected to the negative terminal VBUS- of the power bus; and the opposite-polarity terminal of the primary winding of the first transformer T1 is connected to the common-polarity terminal of the primary winding of the second transformer T2 and grounded.

5. The bidirectional V2G module with grid-connected and off-grid functionality according to claim 4, wherein the power bus side circuit comprises a first balancing branch and a second balancing branch, the first balancing branch comprises a first primary balancing capacitor C1, a first balancing inductor L1, a third primary energy storage capacitor C3, and a first primary balancing switching tube Q1; the second balancing branch comprises a second primary balancing capacitor C2, a second balancing inductor L2, a fourth primary energy storage capacitor C4, and a second primary balancing switching tube Q2; the positive terminal VBUS+ of the power bus, the first balanced inductor L1, the third primary energy storage capacitor C3, and the common-polarity terminal of the primary winding of the first transformer T1 are sequentially connected in series; the negative terminal VBUS- of the power bus, the second balanced inductor L2, the fourth primary energy storage capacitor C4, and the opposite-polarity terminal of the primary winding of the second transformer T2 are sequentially connected in series; one end of the first primary balance switching tube Q1 is connected between the first balanced inductor L1 and the third primary energy storage capacitor C3, the other end of the first primary balance switching tube Q1 is grounded; and one end of the second primary balance switching tube Q2 is connected between the second balanced inductor L2 and the fourth primary energy storage capacitor C4, the other end of the second primary balanced switching tube Q2 is grounded.

6. The bidirectional V2G module with grid-connected and off-grid functionality according to claim 5, wherein the control circuit is configured to separately control conduction and turn off of the first primary balance switching tube Q1, the second primary balance switching tube Q2, and the secondary balance switching tube; the first primary balance switching tube Q1 and the second primary balance switching tube Q2 have a synchronously switching capability; the secondary switch is provided with a complementary switch to the first switching tube Q1, and the secondary switch is provided with a complementary switch to the second switching tube Q2.

7. The bidirectional V2G module with grid-connected and off-grid functionality according to claim 5, wherein the first transformer T1 and the second transformer T2 are connected in parallel; the opposite-polarity terminal of the secondary winding of the first transformer T1 and the opposite-polarity terminal of the secondary winding of the second transformer T2 are connected to the positive terminal VBAT+ of the battery pack/BMS module, separately; and the common-polarity terminal of the secondary winding of the first transformer T1 and the common-polarity terminal of the secondary winding of the second transformer T2 are connected to the negative pole VBAT - of the battery pack/BMS module, separately.

8. The bidirectional V2G module with grid-connected and off-grid functionality according to claim 5, wherein the first transformer T1 and the second transformer T2 are connected in series; the common-polarity terminal of the secondary winding of the first transformer T1 is connected to the opposite-polarity terminal of the secondary winding of the second transformer T2; the opposite-polarity terminal of the secondary winding of the first transformer T1 is connected to the positive terminal VBAT+ of the battery pack/BMS module; and the common-polarity terminal of the secondary winding of the second transformer T2 is connected to the negative terminal VBAT- of the battery pack/BMS module.

9. The bidirectional V2G module with grid-connected and off-grid functionality according to claim 5, wherein the bidirectional DCDC conversion circuit comprises a first secondary energy storage circuit, a second secondary energy storage circuit, a first relay K1, a second relay K2, and a third relay K3; the first secondary energy storage circuit comprises a first secondary branch and a second secondary branch, and the second secondary energy storage circuit comprises a third secondary branch and a fourth secondary branch;
the first secondary branch is respectively connected to the opposite-polarity terminal of the secondary winding of the first transformer T1 and the positive terminal VBAT+ of the battery pack/BMS module, the first secondary branch is connected to the third secondary branch through the second relay K2;
the second secondary branch is connected to the common-polarity terminal of the secondary winding of the first transformer T1; and the second secondary branch is connected to the negative terminal VBAT- of the battery pack/BMS module through the third relay K3;
the third secondary branch is connected to the opposite-polarity terminal of the secondary winding of the second transformer T2, the third secondary branch is connected to the positive terminal VBAT+ of the battery pack/BMS module through the first relay K1; and
the fourth secondary branch is respectively connected to the common-polarity terminal of the secondary winding of the second transformer T2 and the negative terminal VBAT- of the battery pack/BMS module.

10. The bidirectional V2G module with grid-connected and off-grid functionality according to claim 5, wherein the rectification inverter circuit comprises a three-phase six-switch circuit, and the three-phase electricity of the power grid comprises a power grid A-phase VA, a power grid B-phase VB, and a power grid C-phase VC;
the A-phase VA of the power grid is connected to one end of a third inductor L3, and the other end of the third inductor L3 is connected to the positive terminal VBUS+ of the power bus through a fourth primary switching tube Q4, the other end of the third inductor L3 is connected to the negative terminal VBUS- of the power bus through the seventh primary switching tube Q7;
the B-phase VB of the power grid is connected to one end of a fourth inductor L4, and the other end of the fourth inductor L4 is connected to the positive terminal VBUS+ of the power bus through a fifth primary switching tube Q5, the other end of the fourth inductor L4 is further connected to the negative terminal VBUS- of the power bus through an eighth primary switching tube Q8; and
the C-phase VC of the power grid is connected to one end of a fifth inductor L5, and the other end of the fifth inductor L5 is connected to the positive terminal VBUS+ of the power bus through a sixth primary switching tube Q6, and the other end of the fifth inductor L5 is further connected to the negative terminal VBUS- of the power bus through a ninth primary switching tube Q9.

11. The bidirectional V2G module with grid-connected and off-grid functionality according to claim 10, wherein the rectification inverter circuit comprises an I-type three-level circuit.

12. The bidirectional V2G module with grid-connected and off-grid functionality according to claim 11, wherein the A-phase VA of the power grid is connected to one end of the third inductor L3, and the other end of the third inductor L3 is connected to the positive terminal VBUS+ of the power bus through the fourth primary side switching tube Q4 and a seventeenth primary side switching tube Q17; the fourth primary side switching tube Q4 and the seventeenth primary side switching tube Q17 are grounded through a third diode D3, and a positive terminal of the third diode D3 is grounded; a negative terminal of the third diode D3 is connected between the fourth primary side switching tube Q4 and the seventeenth primary side switching tube Q17, and the other end of the third inductor L3 is further connected to the negative terminal VBUS- of the power bus through a seventh primary switching tube Q7 and a twentieth primary switching tube Q20; the seventh primary switching tube Q7 and the twentieth primary switching tube Q20 are grounded through the fourth diode D4; the positive terminal of the fourth diode D4 is connected between the seventh primary switching tube Q7 and the twentieth primary switching tube Q20, and a negative terminal of the fourth diode D4 is grounded;
the B-phase VB of the power grid is connected to one end of the fourth inductor L4, and the other end of the fourth inductor L4 is connected to the positive terminal VBUS+of the power bus through the fifth primary side switching tube Q5 and a sixteenth primary side switching tube Q16; the fifth primary side switching tube Q5 and the sixteenth primary side switching tube Q16 are grounded through the first diode D1; and the positive terminal of the first diode D1 is grounded, the negative pole of the first diode D4 is connected between the fifth primary side switching tube Q5 and the sixteenth primary side switching tube Q16; the other end of the fourth inductor L4 is further connected to the negative terminal VBUS- of the power bus through an eighth primary switching tube Q8 and a ninteenth primary switching tube Q19; the nineteenth primary switching tube Q19 is connected to the negative pole VBUS- of the power bus, and the eighth primary switching tube Q8 and the nineteenth primary switching tube Q19 are grounded through a second diode D2; a positive terminal of the second diode D2 is connected between the eighth primary switching tube Q8 and the nineteenth primary switching tube Q19, and a negative terminal of the second diode D2 is grounded;
the power grid C-phase VC is connected to one end of the fifth inductor L5, and the other end of the fifth inductor L5 is connected to the positive terminal VBUS+ of the power bus through a sixth primary switching tube Q6 and an eighteenth primary switching tube Q18; the sixth primary switching tube Q6 and the eighteenth primary switching tube Q18 are grounded through the fifth diode D5; a positive terminal of the fifth diode D5 is grounded; a negative terminal of the fifth diode D5 is connected between the sixth primary switching tube Q6 and the eighteenth primary switching tube Q18, and the other end of the fifth inductor L5 is further connected to the negative terminal VBUS- of the power bus through the ninth primary switching tube Q9 and a twenty-first primary switching tube Q21; the ninth primary switching tube Q9 and the twenty-first primary switching tube Q21 are grounded through a sixth diode D6; the positive terminal of the sixth diode D6 is connected between the ninth primary switching tube Q9 and the twenty-first primary switching tube Q21, and the negative terminal of the sixth diode D6 is grounded.

13. The bidirectional V2G module with grid-connected and off-grid functionality according to claim 10, wherein the rectification inverter circuit further comprises a T-type three-level circuit.

14. The bidirectional V2G module with grid-connected and off-grid functionality according to claim 13, wherein the A-phase VA of the power grid is connected to one end of the third inductor L3, and the other end of the third inductor L3 is connected to the positive terminal VBUS+ of the power bus through the fourth primary switching tube Q4; the other end of the third inductor L3 is further grounded through a tenth primary switching tube Q10 and an eleventh primary switching tube Q11; the B-phase VB of the power grid is connected to one end of the fourth inductor L4, and the other end of the fourth inductor L4 is connected to the positive terminal VBUS+ of the power bus through the fifth primary switching tube Q5, the other end of the fourth inductor L4 is further grounded through a twelfth primary switching tube Q12 and a thirteenth primary switching tube Q13; the C-phase VC of the power grid is connected to one end of the fifth inductor L5, and the other end of the fifth inductor L5 is connected to the positive terminal VBUS+ of the power bus through the sixth primary switching tube Q6; and the other end of the fifth inductor L5 is further grounded through a fourteenth primary switching tube Q14 and a fifteenth primary switching tube Q15.

15. The bidirectional V2G module with grid-connected and off-grid functionality according to claim 14, wherein a drain of the tenth transistor Q10 is connected to the third inductor L3, a source of the tenth transistor Q10 is connected to a source of the eleventh transistor Q11, a drain of the eleventh transistor Q11 is grounded, a drain of the twelfth transistor Q12 is connected to the fourth inductor L4, a source of the twelfth transistor Q12 is connected to a source of the thirteenth transistor Q13, a drain of the thirteenth transistor Q13 is grounded, a drain of the fourteenth transistor Q14 is connected to the fifth inductor L5, a source of the fourteenth transistor Q14 is connected to the fifteenth inductor L4, a source of the primary switch Q15 is connected, and the drain of the fifteenth primary switch Q15 is grounded; and each of the switching tube is a MOSFET power transistor, and the control circuit is connected to the corresponding control terminals of each switching tube and each relay.
